# EUROPEAN PATENT APPLICATION

(11) **EP 4 574 913 A1**
(43) Date of publication of application: **25.06.2025**
(21) Application number: 24189870.9
(22) Date of filing: 19.07.2024
(51) Int. Cl.: C09D 5/00, C09D 105/08, C09D 7/20, C09D 7/63, C09D 7/65, B27K 7/00, B65D 39/00, B67B 1/03

(54) **COMPOSITION FOR WATERPROOFING COATING OF CORK SUBSTRATES AND RESPECTIVE APPLICATION METHOD**

(30) Priority: 29.11.2023 PT 2023119081
(71) Applicant: Diagonal Precision, Unipessoal, Lda, 4410-129 Sao Félix da Marinha (PT)
(72) Inventor: PEGADO CAMPOS MARQUES, LUIS MIGUEL, 4410-129 SÃO FELIX DA MARINHA (PT); SOARES PEIXOTO, RICARDO JORGE, 4400-086 SANTA MARINHA (PT)
(74) Representative: Patentree

(57) **Abstract**

Application method and composition for waterproofing coating of a cork substrate, comprising: 0.1 - 5% (w/w) of chitosan; 0.01 - 2% (w/w) of acid of the carboxylic group; 86 - 99% (w/w) of demineralized water; up to 1% (w/w) of hydrophobic wax; up to 1% (w/w) of ethyl alcohol; up to 2% (w/w) of emollient.

## Description

### TECHNICAL FIELD

The present description concerns the use of a waterproofing coating for cork substrates, made from a Chitosan-based composition, as a barrier against the transmission of components undesirable for beverages.

### BACKGROUND ART

Cork has been used as a sealant since ancient times. Taking advantage of its unique characteristics, everything from olive oil to wine, water, food and an endless list of products has been stored, but until recently, cork was only required to keep the products suitable for food. All this has changed and never before has so much been demanded from cork like today. A performance that often conflicts with cork's own composition.

Let us take tannins as an example. Tannins are polyphenolic compounds that naturally exist in the chemical composition of cork, accumulating mainly in the woodiest parts (the area of cork with the weakest quality). They represent ± 6% of cork and are responsible for its colour.

In nature, these compounds are very abundant and have very important functions in the balance of vegetation, and since they are strongly astringent and bitter compounds, they keep predators away from plants. Tannins are not structuring compounds in cork; and as such, they can be easily extracted by the alcohol present in the beverage.

This is a problem that has been concerning cork industry for a long time. If, on the one hand, the controlled transmission of some tannin can "strengthen" the wine matrix, on the other hand, the uncontrolled transmission causes its adulteration due to the abovementioned astringency characteristic. This reaction is much more serious in spirits because as these have a very strong alcohol content, they exponentially enhance the migration of tannins into beverages, besides, and to worsen the situation, most spirits are transparent, for example, tequilas, vodkas, gins... making them even more susceptible to the detection of yellowing in the beverage (a synonym for the presence of tannins).

This phenomenon is one of the main causes of complaints in cork industry and has been worsening. At the moment there is a great shortage of cork and a decline in its quality in our dehesa (cork oak forests). Consequently, the tannin content present in cork has increased, as have customer complaints.

It was soon realized that it would be impossible to extract all the undesirable components without damaging the cork structure. Therefore, the industry has established that one of the most important phases in solving the problem of tannin transmission is in the final treatment, because it is in this phase that a stopper cover is established, which aims to provide a barrier against the undesirable compounds that may be present in the stopper (mainly tannins), preventing them from migrating into the bottled beverage.

The industry has evolved little or nothing in recent decades, continuing to use paraffins or paraffin-derived products to waterproof stoppers. Paraffin is an organic, hydrophobic, relatively unreactive compound, with no odour or taste, which provides some protection to the stopper. Associated with this product, polysiloxanes are often used, which are inorganic polymers that, in addition to providing some protection, also play a role in lubricating the cork.

All these compounds have chemical limitations, are derived from petroleum, have restrictions on their use in contact with food, are sensitive to temperature variations and do not create barriers strong enough to combat the phenomenon of migration of the undesirable compounds.

To overcome this problem, the industry has developed processes to waterproof the cork. It places massive overlapping layers of high-melting point paraffin on the stopper. These processes are time-consuming, expensive, fallible and cause a serious food safety problem, since, according to European regulations, with this type of treatments, the maximum permitted level of paraffin for a product that can come into contact with food is largely exceeded.

In recent years there have been attempts to use Chitosan as a barrier against tannins, but these studies were cancelled because they have never been able to manipulate the process in order to produce a film strong and innocuous enough to justify its application.

Since that barrier didn't have the necessary characteristics for its function, they decided to simultaneously use a crosslinker/plasticizer, but which use, according to the European legislation, does not allow the contact with food; thus, due to incorrect laboratory procedures, as well as the lack of a crosslinker suitable for food contact, all projects in this field have been abandoned.

Therefore, this problem persists and is discussed in the cork sector with some description because, on the one hand, a 100% effective solution has not yet been found and, on the other hand, one also does not want to alarm customers.

It is also worth noting that, along with tannins, there are other compounds in cork which transmission to beverages seriously impairs its performance, namely TCA (Trichloroanisole). This chemical compound is formed through enzymes that are present in fungi commonly found in nature. These enzymes act on chlorophenols, transforming them into chloroanisoles, and even in tiny amounts, they cause the infamous musty taste, which was, and still is, the biggest technical problem in the cork sector in recent decades, and the origin of many complaints and compensation claims. At the moment, this compound can only be removed through processes of
- Distillation under controlled steam,
- Volatilization by entrainment at controlled temperature and humidity,
- Volatilization by entrainment in a gaseous phase with adjusted polarity, under controlled temperature and humidity,
- Extraction with CO₂ in the supercritical state.

Some of these processes are efficient, but extremely invasive, expensive and complex.

Document PT3094699 presents a composition comprising cork or a cork-based material and a binder that comprises at least one polyepoxide, its preparation process, a process for manufacturing a stopper, and the use of polymers synthesized by opening epoxy functions as adhesives for cork or the cork-based material.

Document EP3094699 refers to a composition that includes cork or a cork-based material and an epoxide binder prepared from non-highly toxic raw materials, preferably originating from biomass. In particular, the epoxide binder is synthesized from two specific reaction compounds (A) and (B), compound (A) comprising at least two epoxy groups and compound (B) comprising at least two amino groups. This document also refers to the method for preparing said composition.

These facts are described in order to illustrate the technical problem solved by the embodiments of this document.

### GENERAL DESCRIPTION

Chitosan is obtained through a process of deacetylation and purification of a compound existing in nature, Chitin.

Chitin is found mainly in the exoskeletons of insects and crustaceans and in the cell walls of some fungi. It is a compound very abundant in nature, it is inert, insoluble and has several applications, including as a food supplement.

Chitosan has also been used in various industries, for different purposes, but despite several attempts, it has never been a viable option in the cork industry.

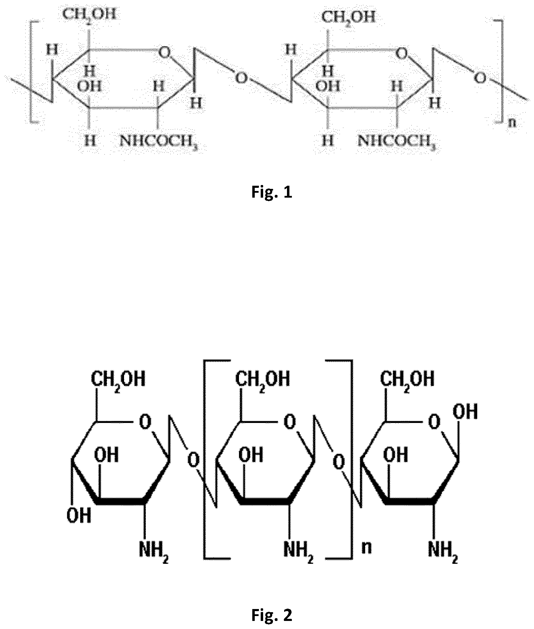

**Figure 1** shows an embodiment of the chemical formula of Chitin. Through a process of deacetylation and purification of chitin, Chitosan is formed, the acetamide group being replaced in this process by the amine group, as shown in **Figure 2****.**

Chitosan is a hydrophilic polymer of high mass, polar, capable of forming hydrogen bonds with water and receptive amine groups, and chemical reactions such as formation of salts with acids. For this reason, Chitosan turns to be a much more attractive product for the industry.

The main characteristics include antifungal and antibacterial activity, biodegradability, selective permeability, polyelectronic action, chelation power and adsorptive capacity.

With the characteristics of Chitosan, the aim is to work with a different approach. More than creating a layer of protective paraffin on the surface of the stopper or leaching with alcohol, which have already proven not to be very effective, the aim is to retain the undesirable compounds, penetrating the interior of the stopper and sealing them through a chitosan biofilm. This biofilm contains a nanoporous structure that only allows a healthy exchange of gases in a controlled manner.

Given the properties of Chitosan, an innovative procedure was defined, using a bio-crosslinker. For the first time, a biodegradable, innocuous waterproofing coating composition has been developed, with antifungal and antibacterial activity, which creates a barrier against the migration of various compounds undesirable for cork.

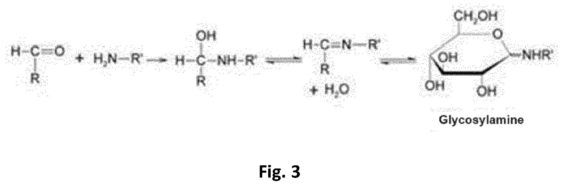

The formulation of the compositions for waterproofing coatings causes problems that can be listed as follows:
The Maillard reaction. This reaction takes place in the presence of the carbonyl group of sugars that are naturally present in distilled alcoholic beverages and the amino group present in Chitosan, causing a substantial loss of Chitosan's characteristics, as well as a yellowing of the beverage, as shown in **Figure 3****.**

As previously mentioned, Chitosan results from a process of deacetylation of Chitin. This process is not 100% effective, that is, no matter how purified the Chitosan is, there will always be Chitin present capable of reacting, which will interfere with the performance of the biofilm.

Chitosan is obtained based on a natural product; therefore, the biofilm raw material is subject to variations such as the degree of purity, viscosity, molecular mass, and humidity of the product, which will influence the biofilm's performance.

The formation of the waterproofing coating composition is extremely sensitive to changes in its application parameters, namely a variation in pH, the amount and concentration of products.

In short, during the process of forming the waterproofing coating, we must inhibit adverse reactions and strictly control all parameters that may influence the result of the process, to guarantee the effectiveness of the biofilm.

This innovative process is not limited to the simple use of dissolved Chitosan, becausethis has already been tried and was unsuccessful, buttothe use of a formulation that, as a whole, will strengthen the waterproofing coating composition.

### First major innovative aspect:

The addition of a crosslinking accelerator of natural origin which, in addition to its suitability for food use, has antifungal and antibacterial properties that exponentially improve the mechanical properties of the film and its resistance to water.

### Second major innovative aspect:

A pH stabilizer that controls the speed of gelation between the crosslinker and Chitosan, but which does not react immediately with Chitosan, thus allowing its industrial application without restrictions.

### Third major innovative aspect:

The addition of an emollient suitable for food contact, which improves the mechanical properties of the biofilm.

### Fourth major innovative aspect:

The addition of a hydrophobic agent of natural origin that, in addition to its suitability for food use, exponentially improves the mechanical properties of the film.

### Fifth major innovative aspect:

The application mode. The effectiveness of the biofilm is very dependent on the mode of application, that is, factors such as concentration and amounts of products to be used, pH control, crosslinking time, drum rotation speed, all of this has been duly improved.

This waterproofing coating composition retains all the antifungal and antibacterial properties necessary to combat the proliferation of fungi. Taking TCA as an example; preliminary studies indicate a reduction of between 40% and 60% in the TCA content after applying this coating. Despite being preliminary tests, they are highly promising and open the door to a new way of combating the biggest problem in this sector.

This waterproofing coating composition forms a barrier, preventing the transmission of tannins, sequestering them inside the stopper and preventing a direct contact of the tannins with the alcoholic solution. Therefore, this coating is specially designed for colourless distilled beverages, namely: Tequila, Gin, Vodka, "Cachaga", Brandy, Sake, Baijiu, and others.

With appropriate adaptations, the composition object of this invention can be prepared for the purpose of coating, treating, waterproofing and disinfecting cork oaks, cork, cork stoppers, cork granules and cork composites.

The subject composition is made only of substances that can be in contact with food. Chitosan, the hydrophobic agent, pH stabilizer and crosslinking accelerator are natural and biodegradable substances. These aspects are very important and take into account the sustainability requirements of the cork stopper industry and alcoholic beverage producers.

The present description concerns a composition for waterproofing coating of a cork substrate, comprising: 0.1 - 5% (w/w) of chitosan; 0.01 - 2% (w/w) of acid of the carboxylic group; 86 - 99% (w/w) of demineralized water; up to 1% (w/w) of hydrophobic wax; up to 1% (w/w) of ethyl alcohol; up to 2% (w/w) of emollient.

In an embodiment, the concentration of Chitosan varies between 0.1 - 3% (w/w), preferably being 0.93% (w/w).

In an embodiment, the concentration of the acid of the carboxylic group in the solution varies between 0.5 - 1% (w/w), preferably being 0.94% (w/w).

In an embodiment, the concentration of the hydrophobic wax in the solution varies between 0.2 - 0.5% (w/w), preferably being 0.42% (w/w).

In an embodiment, the concentration of ethyl alcohol in the solution varies between 0.4 - 0.7% (w/w).

In an embodiment, the concentration of the emollient in the solution varies between 0.5 - 1.1% (w/w).

In an embodiment, the concentration of the crosslinking accelerator in the solution varies between 0 - 0.01% (w/w).

In an embodiment, the concentration of demineralized water in the solution varies between 90 - 96% (w/w).

In an embodiment, the chitosan is of animal origin and/or of fungal origin.

In an embodiment, the acid of the carboxylic group is selected from a list consisting of: methanoic acid, ethanoic acid, propanoic acid, butanoic acid, or combinations thereof.

In an embodiment, the hydrophobic wax is selected from a list consisting of: beeswax, carnauba wax, or combinations thereof.

In an embodiment, the crosslinking accelerator is selected from a list consisting of: sodium alginate, Genipin, citric acid and Tripolyphosphate, or combinations thereof.

In an embodiment, the emollient is selected from a list consisting of: coconut or palm vegetable oil, glycerol, petroleum jelly, or combinations thereof.

The present disclosure also promotes a method of applying a composition for coating a cork substrate such as stoppers, according to any of the previous embodiments, which comprises the following steps: placing the cork substrate in the form of 10 000 natural stoppers measuring 27 mm in length and 20 mm in diameter, previously dusted off and with humidity controlled between 4% - 8%, in a closed drum; mixing 4300 g of the composition with the cork substrate (stoppers); closing and rotating the drum at 8 rpm for about 30 minutes to allow stoppers to become well impregnated; transferring the substrate (stoppers) to a mesh or perforated drum; drying the substrate (stoppers) until it reaches the initial humidity; unloading the substrate (stoppers) and letting it stabilize for 24 hours before any further treatment.

The present disclosure further describes a method of applying a composition for coating a cork substrate according to any of the previous embodiments, which comprises the following steps: placing the cork substrate, previously dusted off and with humidity controlled between 4% - 8%, in a closed drum; mixing 4300 g of the composition with the cork substrate (stoppers); closing and rotating the drum at 8 rpm for about 30 minutes to allow stoppers to become well impregnated; transferring the substrate (stoppers) to a mesh or perforated drum; drying the substrate (stoppers) until it reaches the initial humidity; unloading the substrate (stoppers) and letting it stabilize for 24 hours before any further treatment.

In an embodiment, the cork substrate is a stopper.

In an embodiment, the substrate is placed in the form of 10 000 natural stoppers measuring 27 mm in length and 20 mm in diameter.

### BRIEF DESCRIPTION OF THE DRAWINGS

For an easier understanding, figures are herein attached, which represent preferred embodiments that are not intended to limit the object of the present description.
**Figure 1****:** Representation of Chitin's chemical formula.
**Figure 2****:** Representation of Chitosan's chemical formula.
**Figure 3****:** Representation of the Maillard reaction.

### DETAILED DESCRIPTION

The present disclosure refers to a composition for waterproofing coating of a cork substrate. The application method and composition for waterproofing coating of a cork substrate may comprise: 0.1 - 5% (w/w) of chitosan; 0.01 - 2% (w/w) of acid of the carboxylic group; 86 - 99% (w/w) of demineralized water; up to 1% (w/w) of hydrophobic wax; up to 1% (w/w) of ethyl alcohol; up to 2% (w/w) of emollient.

In an embodiment, the solution may have the following composition: 0.9% (w/w) of Chitosan, 0.9% (w/w) of an acid of the carboxylic group, 0.4% (w/w) of a hydrophobic wax, 0.6% (w/w) of ethyl alcohol, 1.0% (w/w) of an emollient, 0.004% (w/w) of a crosslinking accelerator and 96% (w/w) of demineralized water.

In an embodiment, the process involves applying to 10000 natural cork stoppers measuring 27 mm × 20 mm, a layer of waterproofing coating composition, following the steps indicated below:
Placing stoppers previously dusted off and with humidity controlled between 4% - 8% in a closed drum;
Mixing 4300 g of the solution with the mass of the stoppers;
Closing and rotating the drum at 8 rpm for about 30 minutes to allow stoppers to become well impregnated;
Transferring the stoppers to a mesh or perforated drum;
Drying the stoppers until they reach the initial humidity;
Unloading the stoppers and letting them stabilize for 24 hours before any further treatment.

In an embodiment, the process involves applying to 10 000 microgranulated cork stoppers measuring 27 mm × 20 mm, a layer of waterproofing coating composition, following the steps indicated below:

Placing stoppers previously dusted off and with humidity controlled between 2% - 7%, in a closed drum;
Mixing 3225 g of the solution with the mass of the stoppers;
Closing and rotating the drum at 8 rpm for about 30 minutes to allow stoppers to become well impregnated;
Transferring the stoppers to a mesh or perforated drum;
Drying the stoppers until they reach the initial humidity;
Unloading the stoppers and letting them stabilize for 24 hours before any further treatment.

The present disclosure is focused on solving the problems of transmission of tannins to the beverage and surprisingly it allows avoiding the transmission of tannins from the internal structure of the cork to the beverage. Tannins are natural constituents present in cork, and this waterproofing coating composition, when applied to the cork substrate, blocks the action of tannins, keeping them inactive in the cork structure. That way, tannins do not contaminate the beverage from a bacteriological point of view.

The method of applying the composition for coating a cork substrate of the present disclosure allows the penetration into the internal structure of cork to establish covalent bonds with tannins, trapping them within the cellular structure of the cork.

To measure whether a cork has been well impregnated, especially in contexts like that of the present disclosure, the following methods can be used:
Weighing (measuring the weight of the stopper before and after the composition application process. A significant increase in weight indicates absorption of the liquid);
Microscopy analysis (scanning electron microscopy (SEM), to visualize the penetration of the liquid into the internal structure of the stopper);
Spectroscopy (Using techniques such as infrared spectroscopy (IR) or nuclear magnetic resonance (NMR) to analyse the chemical composition of the stopper before and after impregnation, verifying the presence of the impregnated composition);
Mechanical Tests (Performing compression and flexion tests to verify changes in the mechanical properties of the stopper, which may indicate an adequate level of impregnation).

The present disclosure recommends the use of the composition object of the invention on the cork oak immediately after removing the cork board, or on the cork before or after cooking, or even in articles based on cork composites, taking advantage of its barrier, antifungal and antibacterial properties.

In an embodiment, it is intended to disclose the use of the composition object of this invention in cork granules.

The described embodiments are combinable with each other. The present invention is, of course, in no way restricted to the embodiments described in this document and a person with average skills in the field will be able to foresee many possibilities for modifying the same and replacing technical characteristics with other equivalent ones, depending on the requirements of each situation, as set out in the appended claims. The following claims define additional embodiments of the present description.

## Claims

1. Composition for waterproofing coating of a cork substrate, comprising:
0.1- 5% (w/w) of chitosan;
0.01 - 2% (w/w) of acid of the carboxylic group;
86 - 99% (w/w) of demineralized water;
up to 1% (w/w) of hydrophobic wax;
up to 1% (w/w) of ethyl alcohol;
up to 2% (w/w) of emollient.

2. Composition for waterproofing coating of a cork substrate according to the previous claim, wherein the concentration of chitosan varies between 0.1 - 3% (w/w), preferably being 0.93% (w/w).

3. Composition for waterproofing coating of a cork substrate according to any one of the previous claims, wherein the concentration of the acid of the carboxylic group in the solution varies between 0.5 - 1% (w/w), preferably being 0.94% (w/w).

4. Composition for waterproofing coating of a cork substrate according to any one of the previous claims, wherein the concentration of the hydrophobic wax in the solution varies between 0.2 - 0,5% (w/w), preferably being 0.42% (w/w).

5. Composition for waterproofing coating of a cork substrate according to any one of the previous claims, wherein the concentration of the ethyl alcohol in the solution varies between 0.4 - 0.7% (w/w).

6. Composition for waterproofing coating of a cork substrate according to any one of the previous claims, wherein the concentration of the emollient in the solution varies between 0.5 - 1.1% (w/w).

7. Composition for waterproofing coating of a cork substrate according to any one of the previous claims, wherein the composition further comprises a crosslinking accelerator, wherein the concentration of the crosslinking accelerator in the solution varies up to 0.01% (w/w).

8. Composition for waterproofing coating of a cork substrate according to any one of the previous claims, wherein the concentration of the demineralized water in the solution varies between 90 - 96% (w/w).

9. Composition for waterproofing coating of a cork substrate according to any one of the previous claims, wherein chitosan is of animal origin and/or of fungal origin.

10. Composition for waterproofing coating of a cork substrate according to any one of the previous claims, wherein the acid of the carboxylic group is selected from a list consisting of: methanoic acid, ethanoic acid, propanoic acid, butanoic acid, or combinations thereof.

11. Composition for waterproofing coating of a cork substrate according to any one of the previous claims, wherein the hydrophobic wax is selected from a list consisting of: beeswax, carnauba wax, or combinations thereof.

12. Composition for waterproofing coating of a cork substrate according to any one of the previous claims, wherein the crosslinking accelerator is selected from a list consisting of: sodium alginate, Genipin, citric acid and Tripolyphosphate, or combinations thereof.

13. Composition for waterproofing coating of a cork substrate according to any one of the previous claims, wherein the emollient is selected from a list consisting of: coconut or palm vegetable oil, glycerol, petroleum jelly, or combinations thereof.

14. Method of applying a composition for the coating of a cork substrate according to any one of the previous claims 1-13, comprising the following steps:
placing the cork substrate, previously dusted off and with humidity controlled between 4% - 8% in a closed drum;
mixing 4300 g of the composition with the cork substrate (stoppers);
closing and rotating the drum at 8 rpm for about 30 minutes to allow stoppers to become well impregnated;
transferring the substrate (stoppers) to a mesh or perforated drum;
drying the substrate (stoppers) until it reaches the initial humidity;
unloading the substrate (stoppers) and letting it stabilize for 24 hours before any further treatment.

15. Cork substrate, cork stopper, cork oak, cork granules and cork composites, coated with the waterproofing coating composition according to any one of claims 1-13.
